# EUROPEAN PATENT SPECIFICATION

(11) **EP 2 304 327 B1**
(45) Date of publication and mention of the grant of the patent: **17.04.2019**
(21) Application number: 09758555.8
(22) Date of filing: 02.06.2009
(51) Int. Cl.: F24F 7/06, A01G 9/24

(54) **GREENHOUSE COMPRISING VENTILATION SYSTEM**
EIN VENTILATIONSSYSTEM UMFASSENDES GEWÄCHSHAUS
SERRE COMPRENANT UN SYSTÈME DE VENTILATION

(30) Priority: 02.06.2008 NL 1035507
(43) Date of publication of application: 06.04.2011
(73) Proprietor: Van der Ende Pompen B.V., 2676 CW Maasdijk (NL)
(72) Inventor: VAN DER KOOIJ, Anthonie Izak, 2676 VE Maasdijk (NL)
(74) Representative: van Kooij, Adriaan
(86) International application number: PCT/NL2009/050303
(87) International publication number: WO 2009/148308

(56) References cited:
- WO-A-00/76296
- DE-A1- 2 931 359
- DE-A1- 3 430 031
- DE-A1- 3 632 170
- FR-A- 2 179 506
- US-A- 4 185 545
- US-A- 4 403 732

## Description

The invention relates to an agricultural and/or horticultural greenhouse for cultivating crops therein, wherein the greenhouse is provided with a ventilation system comprising air displacing means for drawing in air in the upper part of the greenhouse, and wherein the ventilation system is adapted to displace the indrawn air in at least substantially vertical direction in the direction of the lower part of the greenhouse, wherein the ventilation system also comprises at least one substantially tubular air duct for guiding the indrawn air from the upper part of the greenhouse in the direction of the lower part thereof. The invention also relates to a method for controlling the climate in a greenhouse. Such ventilation systems are generally known.

Particularly in the case of modern, high greenhouses it is a problem that the heat supplied to the greenhouse for the purpose of creating good conditions for the growth of the crops accumulates in the upper part, i.e. close to the roof, of the greenhouse while the lower part, i.e. where the crop is growing, must be additionally heated in order to maintain an optimum temperature.

Particularly under the influence of the lamps generally used in greenhouses to enhance growth, the difference in temperature between the upper and lower part of the greenhouse can rise due to the radiant heat generated by the lamps, since these are generally to be found in the upper part of the greenhouse.

Although attempts have been made to solve this problem, for instance by arranging vertically blowing fans closer the upper part of the greenhouse, these attempts have not produced a satisfactory result in respect of homogeneity of climate, particularly in the height direction of the greenhouse.

A greenhouse according to the preamble of claim 1 is, for instance, disclosed in DE 29 31 359 A1. A Vertical ventilation system arranged for industrial buildings, comprising an air duct and air displacement means, is disclosed in US 4 403 732 A.

The present invention has for its object to provide an efficient, energy-saving and/or inexpensive greenhouse provided with a ventilation system for the purpose of at least partially solving the above stated problems.

The ventilation system according to the preamble of claim 1 also comprises at least one substantially tubular air duct for guiding the indrawn air from the upper part of the greenhouse in the direction of the lower part thereof. Placing vertically blowing air displacing means alone does not result in a homogeneous temperature distribution in the greenhouse. The crops under the arranged air displacing means are exposed to a relatively strong airflow, while at other locations this influence is minimal. The capacity of the air displacing means according to the known solution is moreover limited in order to prevent possible damage to the crops. A greater capacity will moreover result in even greater differences in temperature.

Such problems are avoided by guiding the air drawn in by the air displacing means from the upper part in the direction of the lower part of the greenhouse by means of an air duct, since the airflow is guided downward while separated from the crops. The capacity of the air displacing means can hereby be increased.

Using said ventilation system warm air in the upper part of the greenhouse is suctioned in and displaced through the air duct in the direction of the cooler lower part of the greenhouse without coming into contact with the crop, thereby avoiding local climate change.

It should be noted that although reference is made to a "tubular" air duct, the cross-section of the air duct is not limited to for instance a round form. It can for instance be advantageous in determined cases to embody the air duct with an angular cross-section. In this context a tubular air duct must therefore be understood to mean a hollow long object for the purpose of guiding the air from the upper part of the greenhouse in the direction of the lower part thereof.

In a preferred embodiment of the greenhouse according to the invention the air duct extends at least substantially in vertical direction, whereby a compact assembly is obtained. The inlet side of the air duct preferably extends in the upper part of the greenhouse, whereby the warm air which is available there can be taken up into the air duct and guided in at least substantially vertical direction to the lower part.

Although reference is made here to the "upper part" of the greenhouse, this location is not limited to a location for instance directly below the surface of the roof of the greenhouse. In this context "upper part" is understood to mean the location where the temperature of the air is higher such that it can become advantageous to guide this warm air back in the direction of the crops. It is moreover important not to place the inlet side too closely under the roof, since the suctioning action is then limited.

The inlet side of the air duct preferably extends at a height of about 30 cm below the gutter height, and the inlet side more preferably extends under a gutter, whereby air can be suctioned from the volumes under two ridges.

The inlet side of the air duct preferably extends between the tops of the crop and the roof of the greenhouse, and the inlet side of the air duct more preferably extends close to the tops of the crop in the greenhouse. Warm air is hereby drawn in from above the crops and guided separately in the direction of the crops. An at least substantially homogenous climate is hereby achieved at the position of the crops.

According to the invention as defined by claim 1, the air duct is arranged downstream of the air displacing means. The air displacing means here extend in the upper part of the greenhouse and can thus draw in and displace the warm air efficiently in the air duct. The displacing means and the air duct preferably connect at least substantially airtightly for this purpose.

The air displacing means are preferably arranged in the upper part of the greenhouse, wherein the air duct is connected on the inlet side to the air displacing means for vertical guiding of the air drawn in by the air displacing means, and the air duct is more preferably connected in suspended manner to the connecting means. For placing of the ventilation system according to the invention it then suffices to arrange, for instance suspend, the displacing means in the upper part of the greenhouse, wherein the air duct is suspended from the air displacing means and supported thereby. Installations which have to be placed on the ground surface at the position of the crops are hereby not required.

In a further preferred embodiment of the greenhouse according to the invention the outlet side of the air duct extends close to the underside of the crop. It is important according to the invention that at the position of the crops the climate is kept as homogenous as possible and the fewest possible local changes in climate are caused. It is advantageous for this purpose to release the warm air at the underside of the crops, for instance at the roots.

When however the crops are planted in a channel situated a distance from the ground surface of the greenhouse, it is recommended that the outlet side extends under the channel holding the crop. This prevents possible local fluctuations in for instance temperature due to the release of warm air at the crops. The outlet side preferably extends just below the cultivating channel, since the outflow of the air is in this way enhanced.

In a further preferred embodiment of the greenhouse according to the invention the air duct is manufactured from plastic, and the air duct is preferably flexible. In this way an inexpensive and robust air duct is obtained which also causes no damage to the crops. This is highly advantageous particularly when the air duct extends between the crops, for instance suspended from the fan.

In a further preferred embodiment of the greenhouse according to the invention the air displacing means comprise at least one fan. The fan is preferably able to withstand moisture and heat. The air displacing means more preferably have a capacity of about 3000 m³/hour. It will be apparent that this is a significant improvement compared to the known systems.

Although mention is made above of the air duct and the air displacing means which comprise a fan, the skilled person will appreciate that a plurality of air ducts and air displacing means, for instance in the form of fans, can be arranged in a greenhouse at a distance from each other. The mutual distance of the different units, substantially consisting of for instance a fan and a connected air duct, can be determined on the basis of the capacity of the air displacing means such that at least the greater part of the air volume can be drawn in from the upper part of the greenhouse by at least one of the air displacing means.

It must also be appreciated that, although the device provides for an advantageous temperature distribution in the greenhouse, the invention also provides for a good distribution of other climate variables, such as for instance humidity, CO₂ content and oxygen content.

The invention further relates to a method according to claim 13 for controlling the climate in an agricultural and/or horticultural greenhouse, comprising of suctioning in air in the upper part of the greenhouse, guiding the air in at least substantially vertical direction by means of an at least substantially tubular air duct in the direction of the lower part of the greenhouse, and there releasing the indrawn air, wherein the suctioning takes place by air displacing means arranged upstream of the air duct. The suctioning comprises of drawing in warm air in the upper part of the greenhouse using air displacing means, for instance a fan. And release of the air preferably comprises of releasing air at the position of the underside of the crops, preferably under a channel holding the crops. And the guiding more preferably comprises of guiding the indrawn air separated from the crops so that local variations in for instance temperature are avoided.

The invention will be further elucidated on the basis of a figure of a preferred embodiment of the invention shown in the drawing, in which the ventilation system is shown schematically in a side view.

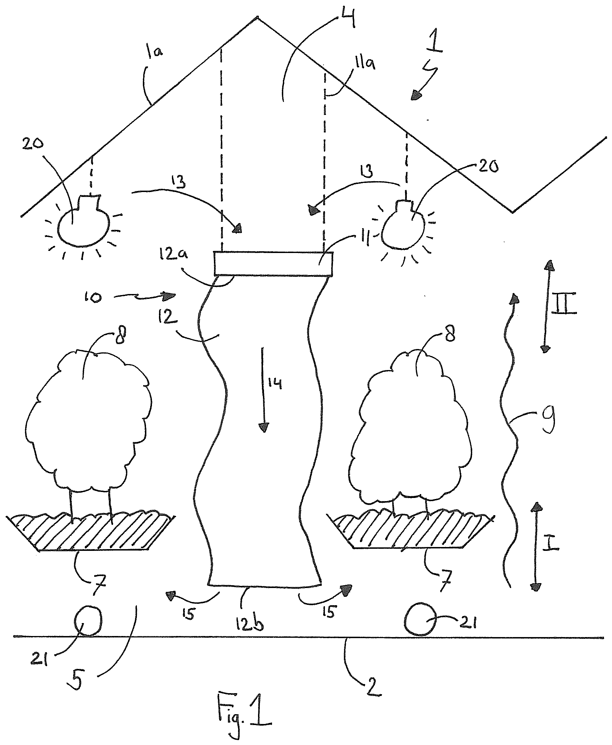

Figure 1 shows a schematic cross-section of a greenhouse 1 with sloping roofs 1a. Situated in this greenhouse 1 are crops 8 planted in channels 7 which are situated some distance from ground surface 2. Provided in this embodiment for heating greenhouse 1 are heat lamps 20 and heating pipes 21.

It is a problem in greenhouses, and particularly in modern, higher greenhouses, that the heat accumulates in the upper part 4 of greenhouse 1. Apart from the fact that warm air, for instance from pipes 21, tends to rise, as indicated with 9, lamps 20 moreover generate radiant heat as well as light. Since these heating lamps 21 are generally situated at the top of a greenhouse, the upper part 4 of a greenhouse 1 will generally be warmer than a space 5 close to the ground or at the position of crops 8, and costly energy is lost heating the air close to crops 8.

In order to reduce this temperature difference and to provide for an at least substantially homogenous climate over the whole height of greenhouse 1, and in particular at the position of crops 8, a ventilation system 10 is provided. This ventilation system 10 according to the invention consists substantially of air displacing means in the form of a fan 11, to the underside of which is connected a tubular air duct in the form of a plastic hose 12. The diameter of the air duct in this embodiment is 31 cm, and fan 11 has corresponding dimensions. Air duct 12 is connected on the open inlet side 12a to fan 11, and the open outlet side 12b of air duct 12 extends to a position close to ground surface 2 of greenhouse 1.

Fan 11 is suspended a distance II from the tops of crops 8 by means of fastening means, for instance in the form of cables 11a. Air duct 12 is connected with inlet side 12a to the outflow side of fan 11 and is herein suspended from fan 11. Indrawn air, indicated with arrows 13, from the upper part 4 of greenhouse 1 is then guided via the inlet side 12a of hose 12 in vertical direction 14 to the outlet side 12b of air duct 12 situated in the lower part 5 of greenhouse 1. The warm air will then heat crops 8 in the directions 15. It is advantageous here that flow 14 is separated from crops 8.

It is advantageous here for the air outflow 15 to take place at a distance I below crops 8, in this case below channels 7, so that crops 8 are not exposed locally to relatively great differences in climate. If there were for instance no channels 7 for holding crops 8, it would be advantageous to have outflow 15 take place close to the roots of a crop 8.

Air duct 12 is manufactured from a flexible plastic, whereby a light assembly is obtained which can be readily suspended from fan 11. Such a flexible material will moreover cause no damage to crops 8, particularly in cases where air duct 12 is situated in a row of crops instead of between two channels 7 as shown in figure 1.

Although only one fan and connected duct is shown in figure 1, it will be apparent to the skilled person that a plurality of systems as shown, for instance placed at regular distances from each other, can be arranged in a greenhouse.

Tests with the ventilation system according to the invention have shown that the differences in temperature between the upper part and the lower part of a greenhouse were at least halved. It will be apparent that this will contribute not only toward decreasing energy consumption for the purpose of heating but also toward homogenizing of the climate in the greenhouse.

It is noted that the invention is not limited to the shown embodiments, but also extends to other preferred variants falling within the scope of the appended claims. The skilled person will thus appreciate that, although a greenhouse with sloping roofs is shown here, the invention also relates to greenhouses having for instance flat roofs. The skilled person will also appreciate that the ventilation system, and in particular the fan, can be arranged in different manner in the greenhouse, for instance using chains, on transverse beams of the structure of the greenhouse, or stands intended for this purpose. It can also be possible to use air displacing means other than fans, for instance pumps.

## Claims

1. Agricultural and/or horticultural greenhouse (1) for cultivating crops (8) therein, wherein the greenhouse (1) is provided with a ventilation system (10) comprising air displacing means (11) for drawing in air in the upper part (4) of the greenhouse (1), and wherein the ventilation system (10) is adapted to displace the indrawn air (13) in at least substantially vertical direction in the direction of the lower part (5) of the greenhouse (1), wherein the ventilation system (10) also comprises at least one substantially tubular air duct (12) for guiding the indrawn air (13) from the upper part (4) of the greenhouse (1) in the direction of the lower part (5) thereof, **characterized in that** the air duct (12) is arranged downstream of the air displacing means (11).

2. Agricultural and/or horticultural greenhouse as claimed in claim 1, wherein the air displacing means (11) are arranged in the upper part (4) of the greenhouse (1), wherein the air duct (12) is connected on the inlet side (12a) to the air displacing means (11) for vertical guiding of the air drawn (13) in by the air displacing means (11).

3. Agricultural and/or horticultural greenhouse as claimed in claim 1 or 2, wherein the air duct (12) is suspended from the air displacing means (11).

4. Agricultural and/or horticultural greenhouse (1) as claimed in claim 1, 2 or 3, wherein an outlet side (12b) of the air duct (12) is open for releasing the indrawn air (13) in the lower part (5) of the greenhouse (1).

5. Agricultural and/or horticultural greenhouse as claimed in any of the foregoing claims 1-4, wherein the inlet side (12a) of the air duct (12) extends between the tops of the crop (18) and the roof (1a) of the greenhouse (1).

6. Agricultural and/or horticultural greenhouse as claimed in any of the foregoing claims 1-5, wherein the air duct (12) extends at least substantially vertically.

7. Agricultural and/or horticultural greenhouse as claimed in any of the foregoing claims 1-6, wherein the outlet side (12b) of the air duct (12) extends close to the underside of the crop (8).

8. Agricultural and/or horticultural greenhouse as claimed in any of the foregoing claims 1-7, wherein the outlet side (12b) extends under a channel (7) holding the crop (8).

9. Agricultural and/or horticultural greenhouse as claimed in any of the foregoing claims 1-8, wherein the air duct (12) is manufactured from plastic.

10. Agricultural and/or horticultural greenhouse as claimed in any of the foregoing claims 1-9, wherein the air duct (12) is flexible.

11. Agricultural and/or horticultural greenhouse as claimed in any of the foregoing claims 1-10, wherein the air displacing means (11) comprise at least one fan.

12. Agricultural and/or horticultural greenhouse as claimed in any of the foregoing claims 1-11, wherein the air displacing means (11) have a capacity of about 3000 m³/hour.

13. Method for controlling the climate in an agricultural and/or horticultural greenhouse (1), comprising of suctioning in air in the upper part (4) of the greenhouse (1), guiding the air in at least substantially vertical direction by means of an at least substantially tubular air duct (12) in the direction of the lower part (5) of the greenhouse (1), and there releasing the indrawn air (13), wherein the suctioning takes place by air displacing means (11) arranged upstream of the air duct (12).

## Patentansprüche

1. Landwirtschaftliches und/oder gartenbauliches Gewächshaus (1) zum Züchten von Pflanzen (8) darin, wobei das Gewächshaus (1) mit einem Lüftungssystem (10) versehen ist, das Luftverschiebungseinrichtungen (11) zum Einsaugen von Luft in dem oberen Teil (4) des Gewächshauses (1) aufweist, und wobei das Lüftungssystem (10) geeignet ist, die eingesaugte Luft (13) wenigstens im Wesentlichen in die vertikale Richtung in die Richtung des unteren Teils (5) des Gewächshauses (1) zu verschieben, wobei das Lüftungssystem (10) auch wenigstens einen im Wesentlichen rohrförmigen Luftkanal (12) zum Leiten der eingesaugten Luft (13) von dem oberen Teil (4) des Gewächshauses (1) in die Richtung seines unteren Teils (5) aufweist, **dadurch gekennzeichnet, dass** der Luftkanal (12) strömungsabwärtig von den Luftverschiebungseinrichtungen (11) eingerichtet ist.

2. Landwirtschaftliches und/oder gartenbauliches Gewächshaus nach Anspruch 1, wobei die Luftverschiebungseinrichtungen (11) in dem oberen Teil (4) des Gewächshauses (1) eingerichtet sind, wobei der Luftkanal (12) auf der Einlassseite (12a) mit den Luftverschiebungseinrichtungen (11) verbunden ist, um die eingesaugte Luft (13) durch die Luftverschiebungseinrichtungen (11) vertikal zu leiten.

3. Landwirtschaftliches und/oder gartenbauliches Gewächshaus nach Anspruch 1 oder 2, wobei der Luftkanal (12) von den Luftverschiebungseinrichtungen (11) aufgehängt ist.

4. Landwirtschaftliches und/oder gartenbauliches Gewächshaus (1) nach Anspruch 1, 2 oder 3, wobei eine Auslassseite (12b) des Luftkanals (12) für die Freigabe der eingesaugten Luft (13) in den unteren Teil (5) des Gewächshauses (1) offen ist.

5. Landwirtschaftliches und/oder gartenbauliches Gewächshaus (1) nach einem der vorhergehenden Ansprüche 1 - 4, wobei die Einlassseite (12a) des Luftkanals (12) sich zwischen den Oberseiten der Pflanzen (18) und dem Dach (1a) des Gewächshauses (1) erstreckt.

6. Landwirtschaftliches und/oder gartenbauliches Gewächshaus nach einem der vorhergehenden Ansprüche 1 - 5, wobei der Luftkanal (12) sich im Wesentlichen vertikal erstreckt.

7. Landwirtschaftliches und/oder gartenbauliches Gewächshaus nach einem der vorhergehenden Ansprüche 1 - 6, wobei die Auslassseite (12b) des Luftkanals (12) sich nahe zu der Unterseite der Pflanzen (8) erstreckt.

8. Landwirtschaftliches und/oder gartenbauliches Gewächshaus nach einem der vorhergehenden Ansprüche 1 - 7, wobei die Auslassseite (12b) sich unter einem Kanal (7), der die Pflanzen (8) hält, erstreckt.

9. Landwirtschaftliches und/oder gartenbauliches Gewächshaus nach einem der vorhergehenden Ansprüche 1 - 8, wobei der Luftkanal (12) aus Kunststoff hergestellt ist.

10. Landwirtschaftliches und/oder gartenbauliches Gewächshaus nach einem der vorhergehenden Ansprüche 1 - 9, wobei der Luftkanal (12) flexibel ist.

11. Landwirtschaftliches und/oder gartenbauliches Gewächshaus nach einem der vorhergehenden Ansprüche 1 - 10, wobei die Luftverschiebungseinrichtungen (11) wenigstens einen Ventilator aufweisen.

12. Landwirtschaftliches und/oder gartenbauliches Gewächshaus nach einem der vorhergehenden Ansprüche 1 - 11, wobei die Luftverschiebungseinrichtungen (11) eine Kapazität von etwa 3000 m³/Stunde haben.

13. Verfahren zur Steuerung des Klimas in einem landwirtschaftlichen und/oder gartenbaulichen Gewächshaus (1), das aufweist: Einsaugen von Luft in dem oberen Teil (4) des Gewächshauses (1), Leiten der Luft wenigstens im Wesentlichen in die vertikale Richtung in die Richtung des unteren Teils (5) des Gewächshauses (1) mit Hilfe eines wenigstens teilweise rohrförmigen Luftkanals (12) und dort Freigeben der eingesaugten Luft (13), wobei das Einsaugen durch Luftverschiebungseinrichtungen (11) stattfindet, die strömungsaufwärtig von dem Luftkanal (12) eingerichtet sind.

## Revendications

1. Serre agricole et/ou horticole (1) pour cultiver des cultures (8) dans celle-ci, dans laquelle la serre (1) comporte un système de ventilation (10) comprenant des moyens de déplacement d'air (11) pour faire entrer par aspiration de l'air dans la partie supérieure (4) de la serre (1), et dans laquelle le système de ventilation (10) est apte à déplacer l'air aspiré (13) dans au moins une direction sensiblement verticale en direction de la partie inférieure (5) de la serre (1), dans laquelle le système de ventilation (10) comprend également au moins un conduit d'air sensiblement tubulaire (12) pour guider l'air aspiré (13) à partir de la partie supérieure (4) de la serre (1) en direction de la partie inférieure (5) de celle-ci, **caractérisée en ce que** le conduit d'air (12) est agencé en aval des moyens de déplacement d'air (11).

2. Serre agricole et/ou horticole selon la revendication 1, dans laquelle les moyens de déplacement d'air (11) sont agencés dans la partie supérieure (4) de la serre (1), dans laquelle le conduit d'air (12) est connecté du côté admission (12a) aux moyens de déplacement d'air (11) pour le guidage vertical de l'air aspiré (13) par les moyens de déplacement d'air (11).

3. Serre agricole et/ou horticole selon la revendication 1 ou 2, dans laquelle le conduit d'air (12) est suspendu aux moyens de déplacement d'air (11).

4. Serre agricole et/ou horticole (1) selon la revendication 1, 2 ou 3, dans laquelle un côté sortie (12b) du conduit d'air (12) est ouvert pour libérer l'air aspiré (13) dans la partie inférieure (5) de la serre (1).

5. Serre agricole et/ou horticole selon l'une quelconque des revendications 1 à 4 précédentes, dans laquelle le côté admission (12a) du conduit d'air (12) s'étend entre les sommets de la culture (18) et le toit (1a) de la serre (1).

6. Serre agricole et/ou horticole selon l'une quelconque des revendications 1 à 5 précédentes, dans laquelle le conduit d'air (12) s'étend au moins sensiblement verticalement.

7. Serre agricole et/ou horticole selon l'une quelconque des revendications 1 à 6 précédentes, dans laquelle le côté sortie (12b) du conduit d'air (12) s'étend à proximité du côté inférieur de la culture (8).

8. Serre agricole et/ou horticole selon l'une quelconque des revendications 1 à 7 précédentes, dans laquelle le côté sortie (12b) s'étend sous un canal (7) maintenant la culture (8).

9. Serre agricole et/ou horticole selon l'une quelconque des revendications 1 à 8 précédentes, dans laquelle le conduit d'air (12) est fabriqué en plastique.

10. Serre agricole et/ou horticole selon l'une quelconque des revendications 1 à 9 précédentes, dans laquelle le conduit d'air (12) est souple.

11. Serre agricole et/ou horticole selon l'une quelconque des revendications 1 à 10 précédentes, dans laquelle les moyens de déplacement d'air (11) comprennent au moins un ventilateur.

12. Serre agricole et/ou horticole selon l'une quelconque des revendications 1 à 11 précédentes, dans laquelle les moyens de déplacement d'air (11) ont une capacité d'environ 3 000 m³/heure.

13. Procédé de commande du climat dans une serre agricole et/ou horticole (1), comprenant la succion d'air dans la partie supérieure (4) de la serre (1), le guidage de l'air dans au moins une direction sensiblement verticale au moyen d'un conduit d'air au moins sensiblement tubulaire (12) en direction de la partie inférieure (5) de la serre (1), et la libération de l'air aspiré (13) à cet endroit, dans lequel la succion intervient par des moyens de déplacement d'air (11) agencés en amont du conduit d'air (12).
